# EUROPÄISCHE PATENTSCHRIFT

(11) **EP 3 154 703 B1**
(45) Veröffentlichungstag und Bekanntmachung des Hinweises auf die Patenterteilung: **26.08.2020**
(21) Anmeldenummer: 15729433.1
(22) Anmeldetag: 11.06.2015
(51) Int. Cl.: B04B 1/20, B04B 15/12, B04B 7/02

(54) **VOLLMANTEL-SCHNECKENZENTRIFUGE**
SOLID-JACKET SCREW CENTRIFUGE
CENTRIFUGEUSE À VIS À BOL PLEIN

(30) Priorität: 12.06.2014 DE 102014108236
(43) Veröffentlichungstag der Anmeldung: 19.04.2017
(73) Patentinhaber: GEA Mechanical Equipment GmbH, 59302 Oelde (DE)
(72) Erfinder: AAGAARD, Poul-Erik, DK-8472 Sporup (DK); KRISTENSEN, Torben, S-43243 Varberg (SE)
(74) Vertreter: Specht, Peter
(86) Internationale Anmeldenummer: PCT/EP2015/063097
(87) Internationale Veröffentlichungsnummer: WO 2015/189349

(56) Entgegenhaltungen:
- WO-A1-2013/101799
- DE-A1- 4 315 074
- DE-A1- 10 256 674
- DE-U- 1 754 873
- US-A- 3 245 613

## Beschreibung

Die Erfindung betrifft eine Vollmantel-Schneckenzentrifuge nach dem Oberbegriff des Anspruchs 1.

Mit Vollmantel-Schneckenzentrifugen lässt sich ein zu verarbeitendes Schleudergut von Feststoffen klären. Eine bekannte Vollmantel-Schneckenzentrifuge zeigt die DE 101 48 774 A. Aus dieser Schrift ist es bekannt, ein Gehäuse für eine Vollmantel-Schneckenzentrifuge allein auf den Bereich des wenigstens einen (oder mehrere) Feststoffaustrages und/oder des Flüssigkeitsaustrages zu beschränken. Dies dient dazu, um bei einem Betrieb unter Druck nicht den gesamten Trommelaußenraum sondern nur noch einen Teil desselben unter Druck setzen zu müssen. Zum Stand der Technik werden auch die DE 43 15 074 A1, die DE 102 56 674 A1 und die US 5 321 898 genannt.

In manchen Fällen muss der aus einer Vollmantel-Schneckenzentrifuge ausgetragene und noch feuchte Feststoff nach der zentrifugalen Verarbeitung weiter getrocknet werden, falls der am Feststoffaustrag erreichte Trocknungsgrad noch nicht ausreicht, um die Feststoffphase - die beispielsweise im Entsorgungsbereich aus Kunststoffteilchen oder dgl. bestehen kann - geeignet weiterverarbeiten oder direkt entsorgen zu können.

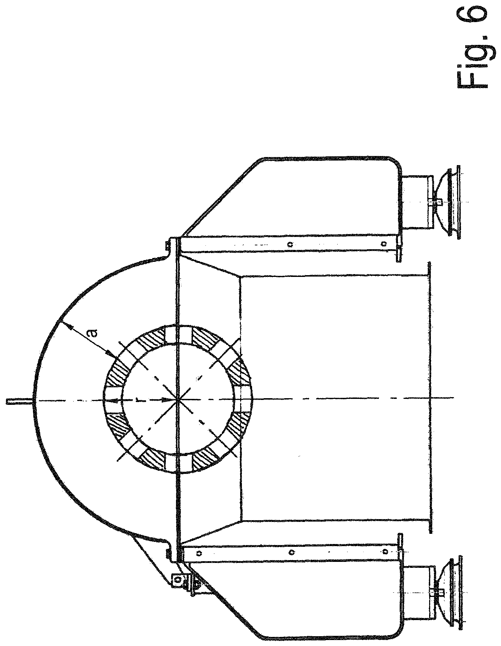

Um aus einer Vollmantel-Schneckenzentrifuge ausgetretene Feststoffe zu trocken, wird der Feststoffaustragskammer bekannter Vollmantel-Schneckenzentrifugen ggf. eine Trocknungsanlage nachgeschaltet, welche dazu dient, den Feststoff, der aus der Feststoffaustragskammer der Vollmantel-Schneckenzentrifuge (siehe Fig. 6) ausgetreten ist und der aus dieser abgeleitet worden ist, ein- oder mehrfach zu trocknen. So ist es nötig, die zu trocknenden Feststoffteilchen aufwendig zu beeinflussen, um sie z.B. nach einem Zusammenbacken wieder zu trennen, um sie mit einem Lüfter oder in einem Heißdampftrockner wieder zu beschleunigen, ggf. zu zerkleinern, zu mischen, zu konzentrieren und zu trocknen. Derartige Trocknungsanlagen, die in der Regel Lüfter sowie Zyklone und andere Einrichtungen aufweisen, sind relativ aufwendig und teuer. Sie verbrauchen zudem oftmals relativ viel Energie.

Es ist auch bereits versucht worden, die aus der Trommel austretenden Feststoffe in eine Trocknungskammer zu trocken, welche an dem Feststoffaustrag der Trommel beginnt und welche sich vorzugsweise vom Feststoffaustrag bis zum entgegengesetzten Ende der Trommel, diese umgebend, erstreckt. Derartige Konstruktionen offenbaren die gattungsgemäße DE 43 26 410 A1, die EP 1 318 871 B1 und die WO 93/00562. Gemeinsam ist diesen Konstruktionen, dass die Trocknungskammern relativ viel Raum einnehmen und dass sie eine relativ komplizierte Geometrie aufweisen, da sie sich von dem einen Ende der Trommel bis zum anderen erstrecken. Zudem ist es schwierig, die Feststoffe mit einem starken Luftstrom durch die sich im Wesentlichen parallel zur Trommel erstreckenden Trocknungskammern zu leiten. Schließlich gestaltet sich auch die Reinigung der kompliziert gestalteten Kammern als schwierig.

Vor diesem Hintergrund ist es die Aufgabe der Erfindung, eine Vollmantel-Schneckenzentrifuge zu schaffen, mit welcher eine vereinfachte Trocknung des aus der Trommel austretenden Feststoffs erreicht wird. Die Erfindung löst diese Aufgabe in Hinsicht auf die Zentrifuge durch den Gegenstand des Anspruchs 1.

Nach Anspruch 1 erstreckt sich das Gehäuse axial parallel zur Drehachse höchstens bis in den konischen Bereich der Trommel oder der Schnecke und sich tragende Elemente einer Maschinenrahmenstruktur wie axial verlaufende Streben oder Pfosten erstrecken sich durch das Innere des Gehäuses und damit das innere der Austragskammer.

Die Erfindung nutzt derart in besonders vorteilhafter Weise die Tatsache, dass die Feststoffteilchen, welche aus der Trommel ausgeschleudert werden, oftmals noch eine relativ hohe Geschwindigkeit aufweisen, so dass es möglich ist, durch eine relativ lange Flugbahn einen höheren Trocknungsgrad zu erreichen als wenn die aus der Trommel ausgeschleuderten Feststoffteilchen unmittelbar nach dem Austritt aus der Trommel auf eine Wand treffen, wo sie ihre kinetische Energie verlieren, bevor sie in einen Feststoffsammelraum gleiten und dann einer speziellen Lüftungsanlage zugeführt und getrocknet werden. Hierbei ist besonders vorteilhaft, dass durch die gewählte Geometrie des Gehäuses dieses einen relativ einfachen Aufbau aufweisen kann, dass es gut gereinigt werden kann und dass besonders vorteilhaft bei der Trocknung der Effekt ausgenutzt wird, dass die Feststoffteilchen radial mit hoher Geschwindigkeit aus der Trommel ausgestoßen werden. Dazu ist es weiter vorteilhaft, wenn das Gehäuse eine im Wesentlichen scheibenartige Geometrie aufweist, dessen axiale Erstreckung kürzer ist als dessen maximale radiale Erstreckung im Bereich oberhalb der Drehachse D.

Vorteilhaft ist zwischen den Feststoffaustragsöffnungen und der radialen Wandungen der Austragskammer kein die Trommel umgebender Ablenkringring ausgebildet, wie dies in er WO93/00562A1 der Fall ist.

Wird die Trocknung bereits direkt mit einer langen trocknenden Flugphase nach dem Austreten aus der Trommel begonnen, backen die Feststoffe zudem erst gar nicht so fest aneinander, da sie trockner als nach dem bekannten Stand der Technik sind, wenn sie auf die radialen Wandungen der Austragskammer auftreffen. Insgesamt wird das Trocknen des Feststoffes derart deutlich vereinfacht.

Optimiert wird der Trocknungseffekt durch den Einsatz einer Gas-, insbesondere Luftbeströmung. Hierdurch kann entweder auf eine weitere Trocknung ganz verzichtet werden oder der Aufwand für eine anschließende Trocknung wird verringert. So kann zwar noch eine ergänzende Trocknungsanlage erforderlich sein, diese kann aber kleiner dimensioniert werden oder energiesparender betrieben werden, beispielsweise bei niedrigeren Temperaturen oder aber muss nicht mehr mehrfach durchlaufen werden, wie dies nach dem Stand der Technik der Fall sein kann. Der apparativ-konstruktive Aufwand zur Umsetzung der Erfindung ist relativ klein. Zudem kann dadurch, dass die kinetische Energie der Feststoffe direkt nach dem Ausschleudern aus der Trommel besonders gut für eine verbesserte Trocknung genutzt wird, der Energiebedarf für die Trocknung insgesamt verringert werden. Das Beströmen mit Gas oder Luft kann durch die rotierende Trommel erfolgen, deren Ventilationswirkung genutzt wird. Ggf. kann die Trommel mit einem oder mehreren Lüfterflügeln versehen werden und/oder mit einem zur Trommel separaten Gas- insbesondere Luftstromerzeuger wird Gas oder Luft zugeführt. Das zugeleitete Gas (z.B. Stickstoff) oder die Luft sollte trocken sein, kann kalt oder gekühlt sein und/oder ergänzend erwärmt werden, was je nach Anwendung weiter optimierte Ergebnisse mit sich bringt. Der Anwender bestimmt die optimale Art der Gas- oder Luftbeströmung (Temperatur, Trockenheit bzw. relative Luftfeuchtegehalt der zugeführten Luft) einfach mit Versuchen oder ggf. rechnerisch.

Dies sei an einem Beispiel erörtert. Bei einer Lufttemperatur von 20°C und einer relativen Luftfeuchte von 40% liegt die absolute Feuchte bei 6,9 g/m³ und der Taupunkt bei +5°C. Wird die Temperatur auf 35°C erhöht, so liegt die absolute Feuchte (bei 40%) bei 15,8 g/m³. Die absolute aufnehmbare und damit transportierbare Wassermenge beim Trocknungsvorgang beträgt in diesem Fall 8,9 g/m³ Luft. In der Praxis kann allerdings die relative Luftfeuchte einer trockenen Ausgangsluft auf beispielsweise 70% relative Luftfeuchte angehoben werden, so dass die absolute Feuchte bei 27,7 g/m³ liegt. Die beim Trocknungsvorgang dann absolute aufnehmbare Wassermenge beträgt dann 17,8 g/m³ Luft (bezogen auf 20°C /40%rel. Luftfeuchte zu 35°C / 70% rel. Luftfeuchte.).

Zweckmäßig ist die Geschwindigkeit des aus der Trommel austretenden Feststoffes größer als 50 m/sec, insbesondere größer als 80 m/sec, besonders vorzugsweise größer als 95 m/sec.

Anders als im eingangs genannten Stand der Technik vorgeschlagen, ist die axiale Erstreckung der Trocknungskammer vorzugsweise relativ gering. Dies bedeutet, dass die Trocknungskammer im Wesentlichen auf den Bereich parallel zur Drehachse beschränkt ist, welches sich unmittelbar axial an die Feststoffaustragsöffnungen anschließt. Vorzugsweise ist die Trocknungskammer in axialer Richtung dazu nicht länger als 1 m, vorzugsweise nicht länger als 0, 7m. Sie erstreckt sich ferner vorzugsweise axial nur bis zum Anfang des konischen Bereiches der Trommel oder maximal bis in diesen hinein.

Vorzugsweise ist die Austragskammer ferner derart bemessen, dass in ihr eine Trocknung der auszutragenden Feststoffe derart erfolgt, dass der Trockensubstanzgehalt der aus der Austragskammer austretenden Feststoffe um wenigstens 5%, vorzugsweise wenigstens 7% höher ist als jener der Feststoffe S, welche aus dem Feststoffaustrag der Trommel in die Austragskammer eintreten. Denn derart ist es in vielen Fällen, insbesondere bei der Verarbeitung von Klärschlamm möglich, die zu trocknenden Feststoffe in einen Trocknungszustand zu bringen, in welchem sie entsorgungsfähig sind. Z.B. kann der Trocknungsgrad von 20% um wenigstens 5 %, also auf mehr als 25% erhöht werden. Dies entspricht auch der Verbesserung gegenüber herkömmlichen Austragskammern, in denen quasi keine bzw. nur eine vernachlässigbare Trocknung erfolgte.

Vorzugsweise beträgt die mittlere Flugzeit der Teilchen vor einem Auftreffen auf eine der Wandungen der Austragskammer mehr als 0,005 sec, vorzugsweise mehr als 0,03 sec, insbesondere mehr als 0,05 sec, um eine sehr gute Trocknung zu erreichen.

Die Vorrichtung und ein Verfahren zu ihrem Betrieb eignen sich insbesondere für relativ leichte Feststoffe geringer Dichte, insbesondere zur Trocknung von Feststoffen, die zum überwiegenden Teil aus Polymeren bestehen bzw. als solche ausgebildet sind. Die Dichte derartiger Feststoffe liegt vorzugsweise bei weniger als 1,60 kg/dm³ insbesondere bei weniger als 1,5 kg/dm³. Die untere Grenze liegt vorzugsweise bei größer 1,00 kg/dm³. Sie werden beispielsweise bei der Abwasseraufbereitung dem zu reinigenden Abwasser insbesondere als Flockungsmittel zugesetzt und sind mit der Zentrifuge wieder zu entfernen.

Die Erfindung eignet sich aber auch für andere Klär- oder Aufkonzentrationsverfahren. Bevorzugte Anwendungsbeispiele (Produkte mit zugehörigen Feststoffdichten) sind:
- Eine Gewinnung von Lactose (kristallin) im Aufkonzentrationsverfahren im Dekanter, mit der Dichte von 1,52 kg/dm³ der Lactose als Feststoff aus dem Ausgangsprodukt Milch, insbesondere Milchrahm;
- Eine Gewinnung von Kasein im Dekanter, mit der Dichte von 1,25 kg/dm³ als Feststoff, insbesondere aus dem Ausgangsprodukt Milch, vorzugsweise Magermilch;
- Eine Gewinnung von Protein im Dekanter, mit einer Dichte von 1,1 kg/dm³ aus einem Erbsen- oder Kartoffelbrei als Ausgangsprodukt; oder
- Eine Gewinnung von Saft und Fruchtbrei (Dichte: 1,1 - 1,2 kg/dm³) aus Karottenbrei als Ausgangsprodukt im Dekanter,
- Eine Gewinnung von Dünnschlempe und Nasskuchen als Feststoff aus Kornmaische im Dekanter, wobei das spezifische Gewicht des Nasskuchens 1,03 kg/dm.³ beträgt.

Auch hier ist die (ggf. jedenfalls ergänzende) Trocknung der Feststoffe nach der Erfindung jeweils besonders vorteilhaft und einfach.

Vorzugsweise beträgt die Temperatur im Trockenbereich bzw. in der Austragskammer bei der Schleudergutverarbeitung mehr als 40, vorzugsweise mehr als 60°C.

Besonders vorteilhaft wird der Luftstrom mit Lüfterflügeln nah zu den Feststoffaustragsöffnungen an einem sich im Betrieb drehenden Teil der Zentrifuge erzeugt. Die Lüfterflügel werden besonders bevorzugt radial außen an einem sich drehenden Teil des Getriebes auf der von der Trommel axial abgewandten Seite der Feststoffaustragsöffnungen angeordnet. Derart wird ein Verschmutzen der Trommel vermieden. Der konstruktive Aufwand zur Erzeugung des Luftstroms ist zudem besonders gering.

Selbstverständlich kann die vorgeschlagene Art der Trocknung auch mit einer weiteren nachgeschalteten zusätzlichen Trocknung kombiniert werden, um den Trocknungsgrad zu erhöhen, wenn dies gewünscht ist. Auch nach dieser Variante wirkt die vorgeschaltete Trocknung in der Feststoffaustragskammer aber vorteilhaft energie- und zeitsparend und vereinfacht den gesamten Trocknungsprozess. So können die nachgeschalteten Trocknungsgeräte kleiner und energiesparender dimensioniert werden als nach dem Stand der Technik

Weitere vorteilhafte Ausgestaltungen sind in den übrigen Unteransprüchen angegeben.

Nachfolgend werden Ausführungsbeispiele anhand der Zeichnung näher beschrieben. Es zeigt:
- Fig. 1a: eine schematische Darstellung einer ersten Variante einer Vollmantel-Schneckenzentrifuge;
- Fig. 1b: eine schematische Darstellung einer zweiten Variante einer Vollmantel-Schneckenzentrifuge ;
- Fig. 2: einen Schnitt durch den Bereich eines Feststoffaustrags einer Vollmantel-Schneckenzentrifuge nach Art der Fig. 1a;
- Fig. 3: eine schematische Darstellung einer dritten Variante einer Vollmantel-Schneckenzentrifuge;
- Fig. 4: eine schematische Darstellung einer vierten Variante einer Vollmantel-Schneckenzentrifuge;
- Fig. 5: ein Flussdiagramm zur Veranschaulichung eines erfinderischen Verfahrens zum Verarbeiten eines Schleudergutes;
- Fig. 6: einen Schnitt durch den Bereich eines Feststoffaustrags einer bekannten Vollmantel-Schneckenzentrifuge; und
- Fig. 7: ein Flussdiagramm zur Veranschaulichung eines bekannten Verfahrens zum Verarbeiten eines Schleudergutes; und

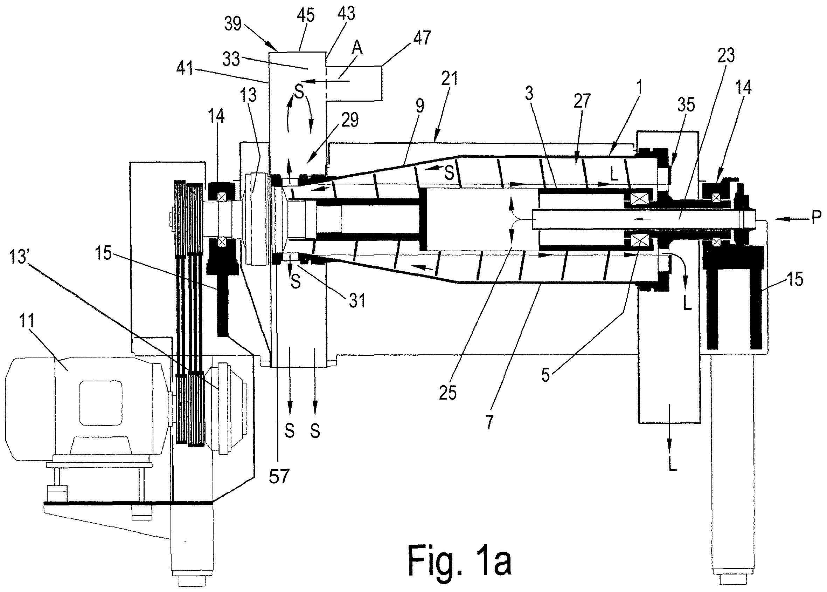

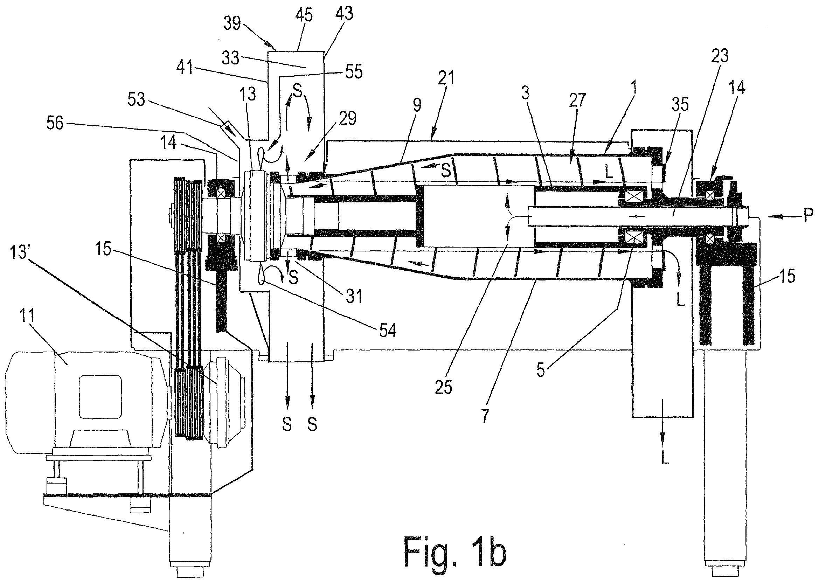

Fig. 1a und b zeigen jeweils eine Vollmantel-Schneckenzentrifuge mit einer Trommel 1 und einer in der Trommel angeordneten Schnecke 3 zum Fördern/Transport eines zu verarbeitenden Schleudergutes ausgebildet. Zwischen der Trommel 1 und der Schnecke 3 sind an den beiden Enden der Vollmantel-Schneckenzentrifuge jeweils Lager 5 und Dichtungen angeordnet (hier nur teilweise abgebildet/zu erkennen). Die Trommel 1 weist in ihrem in Fig. 1 hinteren Bereich einen zylindrischen Abschnitt 7 und in ihrem in Fig. 1 sich daran anschließenden vorderen Bereich vorzugsweise einen sich konisch (oder aber stufenweise) verjüngenden Abschnitt 9 auf.

Zum Antrieb der Trommel 1 und der Schnecke 3 dienen wenigstens eine Antriebsvorrichtung 11 und wenigstens eines oder mehrere Getriebe 13, 13'.

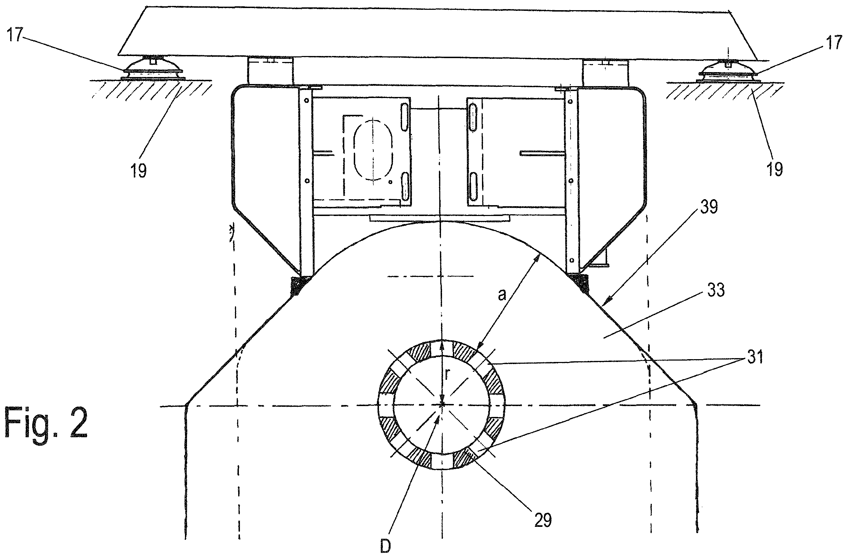

Die Trommel 1 ist drehbar mittels Lagern 14 an wenigstens einem Gestell 15 gelagert, das mittels einer oder mehrerer Füße 17 und ggf. Federanordnungen an einem Fundament 19 abgestützt ist (siehe auch Fig. 2, die sich aber von der Ausgestaltung der Fig. 1 in noch zu erläuternder Weise unterscheidet). Die Trommel 1 ist ferner von einer Haube 21 umgeben.

Die Trommel 1 und die Schnecke 3 der Fig. 1 weisen eine horizontale Drehachse D (Fig. 2) auf. Denkbar ist aber auch eine Ausrichtung der Drehachse insbesondere in vertikaler Richtung.

Ein zentrisches Zulaufrohr 23 und ein sich daran anschließender Verteiler 25 dienen zur Zuleitung einer Schleudergutes (bzw. zu verarbeitenden Produktes P) P in die Trommel 1.

In der Trommel 1 wird das Schleudergut von Feststoffen S geklärt. Abgeleitet werden daher (in entgegengesetzte Richtung) eine Feststoffphase aus Feststoffen S und eine Flüssigkeitsphase L. Es kann ggf. auch eine Phasentrennung in eine oder mehrere Flüssigkeitsphasen L verschiedener Dichte erfolgen.

Das Schleudergut P wird durch das zentral angeordnete Zulaufrohr 23 in den Verteiler 25 und von dort durch radiale Öffnungen im Verteiler 25 in den Schleuderraum 27 mit der Schnecke 3 und der die Schnecke 3 umgebenden Trommel 1 geleitet.

Beim Durchtreten des Verteilers 25 und beim Eintritt in den Schleuderraum 27 wird das Schleudergut beschleunigt. Durch die Einwirkung der Zentrifugalkraft setzen sich Feststoffteilchen an der Trommelwand ab.

Die Schnecke 3 rotiert mit einer etwas kleineren oder größeren Geschwindigkeit als die Trommel 1 und fördert den ausgeschleuderten Feststoff S zum sich verjüngenden Abschnitt hin aus der Trommel 1 zu einem Feststoffaustrag 29 mit einer oder vorzugsweise mehreren umfangverteilten Feststoffaustragsöffnungen 31, die in eine Auffangkammer 33 münden.

Die Flüssigkeit L strömt dagegen zum größeren Trommeldurchmesser am hinteren Ende der Trommel 1 und wird dort durch einen Flüssigkeitsaustrag 35 in eine Ableitungskammer 37 und von dort in hier nicht dargestellte Leitungen und/oder Behälter abgeleitet. Das zu verarbeitende Schleudergut kann ergänzend auch in zwei Flüssigkeitsphasen unterschiedlicher Dichte getrennt werden und dann durch zwei auf verschiedenen Radien angeordneten Flüssigkeitsausträge am hinteren Ende der Trommel aus der Trommel geleitet werden (letzteres hier nicht dargestellt).

Wie in Fig. 1a, 1b und 2 gut zu erkennen, ist die Austragskammer 33 für den Feststoff S nach Art eines Gehäuses 39 ausgelegt, welches axiale Wände 41, 43 aufweist und welches in radialer Richtung Wandungen 45 aufweist, die relativ weit von den eigentlichen Feststoffaustragsöffnungen 31 entfernt sind, so dass der auszutragende Feststoff S aus der mit hoher Drehzahl rotierenden Trommel 1 zunächst relativ weit radial in einer Bogenkurve nach außen fliegen kann, bis er dort ggf. auf die Innenseite der Wandungen 45 trifft.

Dadurch, dass der Feststoff relativ lange fliegt, bis er auf die Wandungen 45 trifft oder bis er vertikal nach unten fällt, wird er während des Fluges relativ lange in der Luft getrocknet. Vorteilhaft verstärkt wird dieser Effekt dadurch, dass ein Gasstrom-, insbesondere Luftstromerzeuger 47, beispielsweise ein Gebläse (vorzugsweise ein "air compressor"), (siehe Fig. 1a) vorgesehen ist, dass derart angeordnet und ausgelegt ist, dass er innerhalb der Austragskammer 33 zum Austrag des Feststoffes S einen relativ starken Gas-, insbesondere Luftstrom A erzeugt, welcher die Trocknung des aus der Trommel ausgeworfenen Feststoffes S unterstützt.

Zu erwähnen ist, dass es auch vorteilhaft denkbar ist, ein sich im Betrieb drehendes Element an der Trommel 1 oder an einem mit der Trommel verbundenen Element ergänzend zu einem separaten Lüfter oder als den einzigen Lüfter einzusetzen, insbesondere, wenn sie mit einem oder mehreren Lüfterflügeln am Außenumfang z.B. im Inneren des Gehäuses versehen ist, welche einen zusätzlich trocknenden Gas-, insbesondere Luftstrom in dem Gehäuse 39 der Austragskammer 33 erzeugen.

Nach Fig. 1b wird dies bei einer ansonsten weitgehend mit Fig. 1a übereinstimmenden Konstruktion dadurch erreicht, dass außen an einem sich im Betrieb drehenden Element des Getriebes in axialer Verlängerung der Trommel (oder an einem Endbereich der Trommel, vorzugsweise axial sehr nahe einer oder mehrere Lüfterflügel 54 außen am Trommelumfang ausgebildet/angeordnet sind. Vorzugsweise beträgt der axiale Abstand zwischen den Lüfterflügeln 54 und den Feststoffaustragsöffnungen 31 weniger als 600 mm. Derart wird direkt mit einem sich im Betrieb drehenden Element des rotierenden Systems (zu dem die Trommel 1 und sich drehende Teile des Getriebes gehören) mit geringstem Aufwand der notwendige trocknende Luftstrom erzeugt.

Das Gehäuse 39 ist dabei bis in den Bereich radial außerhalb des Getriebes 13 verlängert bzw. es weist einen Gehäuseansatz 56 (bevorzugt relativ zum übrigen Gehäuse 39 kleineren Durchmessers) in diesem Bereich auf. Im Bereich außerhalb des Getriebes 13 ist im Gehäuseansatz 56 wenigstens eine Ansaugöffnung 53 ausgebildet, durch welche Luft von außen in den Gehäuseansatz 56 gesaugt werden kann, die von hier in das in das eigentliche (Trocknungs-)Gehäuse 39 geblasen wird. Dazu weist der Gehäuseansatz 56 eine Passage 55 in das eigentliche Trocknungs-Gehäuse 39 auf, durch welche die durch die Ansaugöffnungen 53 angesaugte Luft von den Lüfterflügeln aus dem Gehäuseansatz 56 in das eigentliche Gehäuse 39 geblasen werden kann. An der Zentrifuge der Fig. 1b ist auch vorteilhaft, dass die Lüfterflügel 54 auf der axial vom konischen Bereich der Trommel abgewandten Seite der Feststoffaustragsöffnungen 31 liegen, so dass die eigentliche Trommel 1 im Betrieb nicht vom Feststoff verschmutzt werden kann.

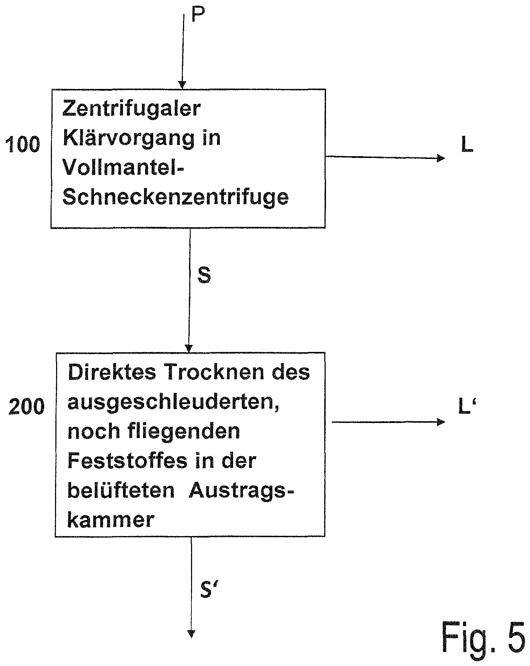

Durch eines oder beide der vorteilhaften Merkmale "Gasstrom-, insbesondere Luftstromerzeuger zur Erzeugung einer die Trocknung von Feststoffen unterstützenden, ggf. erwärmten Luftströmung in der Austragskammer 33" und "relativ großer innerer Radius der Austragskammer" wird es möglich, die austretenden Feststoffe S der Feststoffphase bereits direkt nach ihrem Austritt aus der Trommel 1 relativ stark zu trocknen. Besonders vorteilhaft ist daran, dass die austretenden Feststoffe (siehe Fig. 5, Schritt 100) noch relativ fein verteilt sind und noch eine relativ hohe Geschwindigkeit aufweisen, wenn sie aus den Feststoffaustragsöffnungen austreten. Diese Geschwindigkeit wird im Trocknungsprozess vorteilhaft ausgenutzt, da die Austragskammer 33 einen großen Radius aufweist. Verstärkt wird dies, wenn direkt in ihr ein starker, ggf. warmer oder aber gekühlte, Luftstrom A erzeugt wird (Schritt 200), welcher die austretenden Feststoffteilchen S ergänzend direkt nach dem Austreten aus der Trommel 1 trocknet. Hierdurch wird Restflüssigkeit L' von Feststoffen abgetrennt, die erst dann als weiter getrocknete Feststoffe S*' aus der Austragskammer 33 abgeleitet werden, beispielsweise, indem sie auf ein Förderband fallen (das ergänzend zur Resttrocknung erwärmt/belüftet sein kann). Hierdurch ist es möglich, zusätzliche Einrichtungen zur Trocknung wie Gebläse oder Zyklone usw. die sich nach dem Stand der Technik an die Austragskammer 33 anschließen können, kleiner als sonst üblich auszulegen oder aber auf diese sogar ganz zu verzichten.

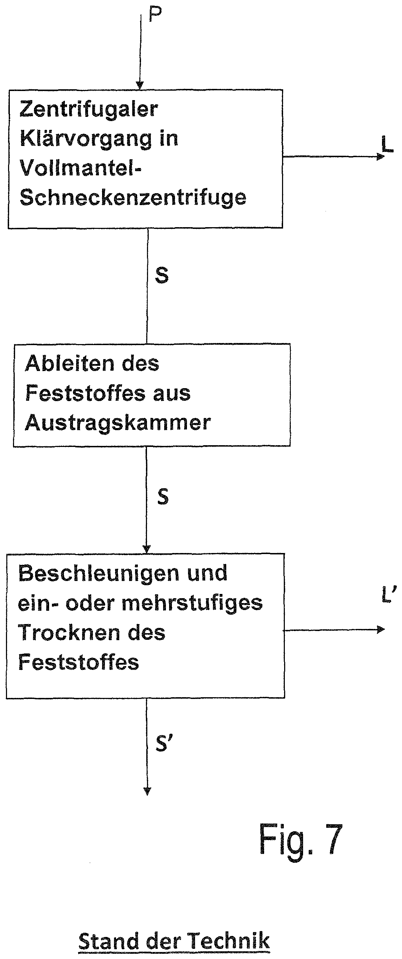

Besonders vorteilhaft veranschaulicht ein Vergleich der Fig. 5 und 7 die Vorteile der Erfindung. Nach dem Stand der Technik, welcher in Fig. 7 dargestellt ist, wird der Feststoff S, der aus der Vollmantel-Schneckenzentrifuge ausgetreten ist, zunächst aus der Feststoffaustragskammer vollständig abgeleitet und erst dann getrocknet. Hierdurch ist es notwendig, den vor dem Ableiten aus der Austragskammer ausgeschleuderten Feststoff beim Trocknen zunächst mit Lüftern oder dgl. zunächst wieder zu beschleunigen und zu separieren, um feine Teilchen zu erhalten, die getrocknet werden können, wobei Restflüssigkeit L' abgetrennt wird und wobei ein getrockneter Feststoff S' übrig bleibt.

Auf den Zwischenschritt des erneuten Beschleunigens der Feststoffe kann vorteilhaft verzichtet werden, wenn die Flugphase des Feststoffes beim Fliegen in der Austragskammer 33 verlängert wird und derart in praktisch relevanter Weise direkt für eine Trocknung genutzt wird. Ein noch besseres Trocknen wird möglich, wenn in dieser Flugphase der bereits erwähnte Gas-, insbesondere Luftstrom A die Teilchen zusätzlich trocknet. Dabei ist es wiederum vorteilhaft, wenn der Gas-, insbesondere Luftstrom temperiert worden ist.

Fig. 2 veranschaulicht einen Schnitt senkrecht zur Drehachse D im Bereich der Feststoffaustragsöffnungen 31. Wie gut zu erkennen, ist eine Mehrzahl von Feststoffaustragsöffnungen 31 vorzugsweise über 30° umfangsverteilt im Bereich des Feststoffaustrags 29 der Trommel 1 vorgesehen.

Die radialen Wandungen 45 sind bzw. die nächste radiale Wandung 45 ist (hier vertikal) oberhalb der Feststoffaustragsöffnungen 31 relativ weit von diesen entfernt angeordnet.

Besonders bevorzugt ist der mittlere und/oder der kleinste/geringste Abstand a der Wandung 45 zu der nächstliegenden Feststoffaustragsöffnung 31 jedenfalls im Bereich des Gehäuses 39, der oberhalb der Drehachse D liegt, größer als der doppelte Abstand "2r" der Feststoffaustragsöffnungen zur Drehachse D. Vorzugsweise gilt sogar:
a > 4r, insbesondere.
a > 6r, besonders bevorzugt a > 8r oder sogar a > 10r.

Insbesondere liegt der mittlere radiale Abstand der Wandungen im Bereich des Feststoffaustrags vertikal oberhalb der Drehachse (also in der oberen Kammerhälfte oberhalb er Drehachse) der Trommel 1 in dem vorstehend angegebenen Bereich.

Durch große Radien und dadurch weiter verlängerte Flugzeiten wird die Trocknung des austretenden Feststoffe S jeweils noch besser unterstützt.

Dabei erstreckt sich das Gehäuse 39 axial parallel zur horizontalen Drehachse D nur über einen relativ kurzen Abschnitt der Trommel, der im Wesentlichen auf en Bereich des Feststoffaustrages und dessen unmittelbar angrenzenden Stück er Trommel beschränkt ist. Zur Trommel hin endet das Gehäuse vorzugsweise vor oder maximal im konischen Bereich der Trommel. Zur anderen Seite hin kann die Trocknungskammer zwar länger sein. Vorzugsweise endet sie hier vor oder im Bereich des Getriebes 13.

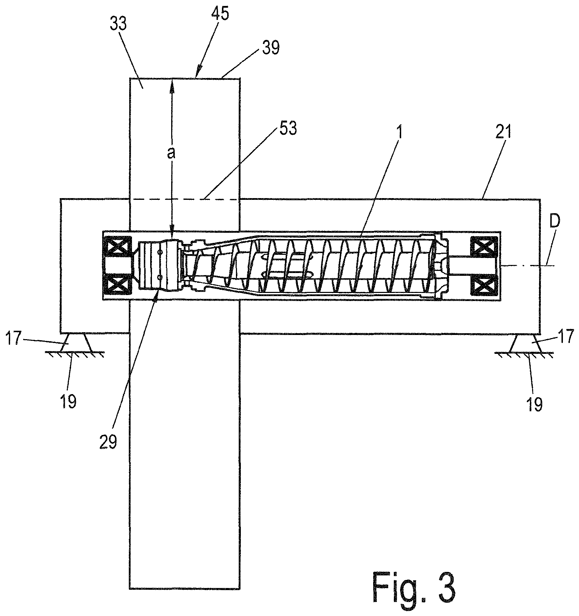

Insbesondere im Fall großer Radien a > 2r oder mehr kann es vorteilhaft sein, wenn sich tragende Elemente einer Maschinenrahmenstruktur wie axial verlaufende Streben 53 oder Pfosten durch das Innere des Gehäuses 39 und damit das innere der Austragskammer 33 insbesondere im Abstand zu deren Wandungen erstrecken (angedeutet in Fig. 3 durch gestrichelte Linien bei 53). Dies ist vorteilhaft, da derart die Stabilität des Systems "Vollmantel-Schneckenzentrifuge" mit Maschinenrahmen durch die außergewöhnlich große Austragskammer nicht beeinträchtigt wird. Gerade das Maschinengestell war bei bestehenden Konstruktionen ein den Radius der Austragskammer stark beschränkender Faktor. Dieses Problem wird durch die vorstehend beschriebene Maßnahme der Streben 53 in der (Feststoff-)Austragskammer 33 auf einfache Weise überwunden.

Es kann auch das Gehäuse 39 selbst eine tragende, maschinengestellartige Funktion übernehmen bzw. als tragendes Teil desselben ausgestaltet sein. Hierzu weist das Gehäuse 39 vorzugsweise größere Blechwandstärken als im Bereich 21 auf und/oder Winkelstreben in den Kantenbereichen auf (hier nicht dargestellt).

Wie weiter zu erkennen, weitet sich das Gehäuse 39 vertikal nach unten hin weiter auf, bevor seine Breite konstant bleibt. Einen sich radial verengenden Bereich weist das Gehäuse vertikal nach unten hin nicht auf.

Bevorzugt fliegen die Feststoffteilchen in der Kammer 33 relativ lange frei, bis sie auf radiale Wandungen 45 des Gehäuses 39 der Austragskammer 33 auftreffen. Vorzugsweise sind die Geschwindigkeit v der austretenden Feststoffteilchen S der Feststoffphase, die Stärke des Gas-, insbesondere Luftstroms in der Austragskammer 33 und der radiale Abstand der Wandung(en) 45 des Gehäuses 39 von den Feststoffaustragsöffnungen 31 so aufeinander abgestimmt, dass mehr als 70%, insbesondere mehr als 85% der Teilchen vertikal unten in der Kammer auf eine Begrenzung oder ein Förderband oder dgl. auftreffen, ohne vorher eine andere seitliche Wandung 45 der Austragskammer 33 berührt zu haben.

Der der Gasstrom-, insbesondere Luftstromerzeuger axial an das Gehäuse 39 angebaut sein kann, ist er in Fig. 2 nicht zu erkennen. Wie erläutert, erzeugt er vorzugsweise einen warmen oder einen gekühlten Gas-, insbesondere Luftstrom. Vorzugsweise ist die Temperatur des Gas-, insbesondere Luftstroms > 40° C.

Fig. 2 veranschaulicht, dass es vorteilhaft sein kann, wenn die Vollmantel-Schneckenzentrifuge (anders als im Stand der Technik, siehe Fig. 5) als hängende Konstruktion ausgeführt ist. Dabei hängt die Trommel nebst Haube und insbesondere mit dem Gehäuse unterhalb und an einer Trägeranordnung 49, die sich über Füße 17 und ggf. Federelemente an dem Fundament 19 oder dgl. abstützt. Vorteilhaft hier ist, dass sich hierdurch viel Raum ergibt, der es ermöglicht, die Wandungen 49 in radialer Richtung relativ weit von den Feststoffaustragsöffnungen 31 zu beabstanden.

Fig. 3 veranschaulicht noch einmal den grundsätzlichen Aufbau der Konstruktion der Fig. 1 mit horizontaler Drehachse D, wobei hier erkennbar ist, dass der radiale Abstand der Wandungen 45 des Gehäuses 39 auch sehr groß gewählt werden kann, so dass gilt, dass der geringste Abstand a der Wandung 45 zu der nächstliegenden Feststoffaustragsöffnung 31 jedenfalls größer ist als a > 4r.

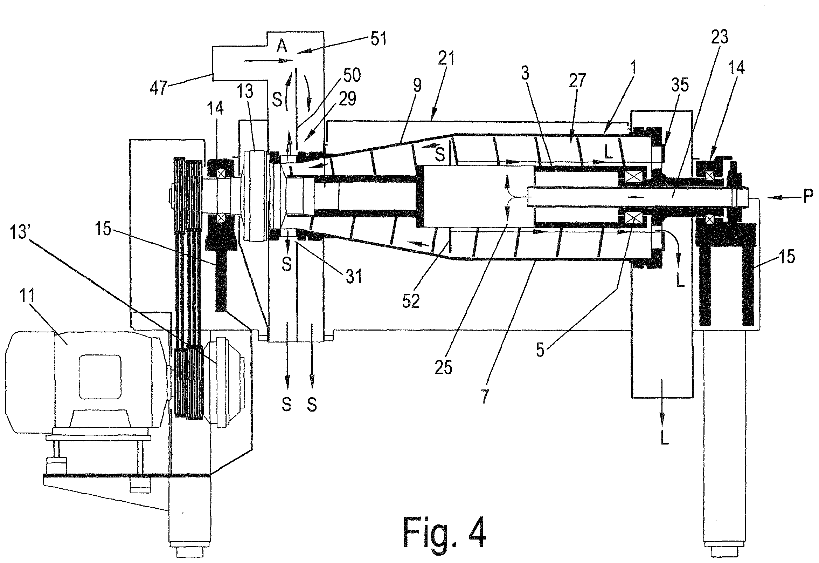

Fig. 4 zeigt eine Vollmantel-Schneckenzentrifuge deren Aufbau weitgehend dem der Fig.1 entspricht.

Im Unterschied zu Fig. 1 weist die Austragskammer 33 der Fig. 4 aber mehrere, hier zwei, Teilkammern auf. Dazu ist innerhalb der Austragskammer eine (hier vertikal sich erstreckende Wand 50 ausgebildet/angeordnet, welche die Austragskammer in die zwei nebeneinander angeordneten Teilkammern unterteilt, die im radial äußeren und oberen Bereich durch eine Passage 51 miteinander verbunden sind. Der Gas-, insbesondere Luftstrom A, welchen der Gasstrom-, insbesondere Luftstromerzeuger erzeugt, ist im Wesentlichen in die Passage axial gerichtet, so dass die Feststoffe S von ihm aus der einen Teilkammer in die andere Teilkammer geblasen werden, in welcher sie nach unten fallen. Durch eine labyrinthartige Unterteilung der Austragskammer in zwei oder mehr miteinander verbundene Teilkammern wird der Trocknungseffekt weiter verbessert, da der Feststoff besonders lange fliegt, bis er auf Wandungen der Austragskammer 33 oder auf den Boden der Austragskammer 33 auftrifft.

In Fig. 1 ist ferner eine Stauscheibe 52 am Außenumfang des Schneckenkörpers dargestellt. Die Stauscheibe 52 ist vorzugsweise im Übergangsbereich zwischen einem konischen und einem zylindrischen Abschnitt angeordnet. An ihr stauen sich Feststoffe, die aber dennoch durch einen Spalt zwischen dem Außenradius der Stauscheibe 52 und der Innenwand der Trommel 1 mit der Schnecke in Richtung des Feststoffaustrags gefördert werden. Dies ist insbesondere von Interesse, um den Flüssigkeitsspiegel im zylindrischen Abschnitt zu erhöhen. Dies ist bei bestimmten Konstruktionen wichtig, um zu verhindern, dass Flüssigkeit ggf. durch den Feststoffaustrag ausfließt, wenn dies die Konstruktion von Trommel und Schnecke erlauben würde, beispielsweise, wenn der Feststoffaustrag auf einem relativ großen Außendurchmesser liegt und der Konizitätswinkel relativ gering ist.

Denkbar ist auch eine (hier nicht dargestellte) Vollmantel-Schneckenzentrifuge mit vertikaler Drehachse D', wobei auch hier der der radiale (und in diesem Fall horizontale) Abstand der Wandungen 45 des Gehäuses 39 sehr groß gewählt werden kann, so dass gilt, dass der geringste Abstand a der Wandung 45 zu der nächstliegenden Feststoffaustragsöffnung 31 jedenfalls größer ist als a > r, insbesondere a > 2r, vorzugsweise a> 8r. Diese Variante wird aber weniger bevorzugt als die mit einer Vollmantel-Schneckenzentrifuge mit horizontaler Drehachse, da sich bei letzterer die Trocknungskammer in besonders vorteilhafter Weise dazu in vertikaler Richtung so gestalten lässt, dass die zu trocknenden Feststoffe S in ihr aufgrund der Schwerkraft eine besonders lang andauernde, trocknende Flugbahn beschreiben.

Im Versuch mit Schlamm aus einer öffentlichen Kläranlage wurde das erfindungsgemäße Verfahren getestet. Hierbei wurde eine Abdeckung einer Austragskammer 33 eines Dekanters vom Typ UCD 305 der Anmelderin so modifiziert, dass die Teilchen (d.h. der Feststoff S), insbesondere Polymerteilchen, der bei einer Abwasseraufbereitung aus den Feststoffaustragsöffnungen austritt, länger fliegen konnten. Verglichen wurde dies mit einem Betrieb ohne entfernte Abdeckung. Gegenüber diesem letztgenannten, konventionellen Dekanter wurde der Trockenmasseanteil im Feststoff durch das Trocknen um ca. 5% oder sogar 7% oder mehr erhöht, was sehr vorteilhaft ist, da dies genügen kann, um den Feststoff direkt verarbeiten oder deponiefähig lagern zu können. Da der Feststoff im Wesentlichen aus Polymerteilchen besteht, die eine relativ geringe Dichte aufweisen, fliegen diese relativ lange und relativ langsam in der Austragskammer 33 und werden dadurch entsprechend gut getrocknet.

**Bezugszeichen**

| | |
|---|---|
| Trommel | 1 |
| Schnecke | 3 |
| Lager | 5 |
| zylindrischer Abschnitt | 7 |
| konischer Abschnitt | 9 |
| Antriebsvorrichtung | 11 |
| Getriebe | 13 |
| Lager | 14 |
| Maschinengestell | 15 |
| Füße | 17 |
| Fundament | 19 |
| Haube | 21 |
| Einlaufrohr | 23 |
| Verteiler | 25 |
| Schleuderraum | 27 |
| Feststoffaustrag | 29 |
| Feststoffaustragsöffnungen | 31 |
| Austragskammer | 33 |
| Flüssigkeitsaustrag | 35 |
| Ableitungskammer | 37 |
| Gehäuse | 39 |
| Wände | 41, 43 |
| Wandungen | 45 |
| Gasstromerzeuger | 47 |
| Trägeranordnung | 49 |
| Wand | 50 |
| Passage | 51 |
| Stauscheibe | 52 |
| Ansaugöffnung | 53 |
| Lüfterflügel | 54 |
| Passage | 55 |
| Gehäuseansatz | 56 |
| | |
| Schleudergut (Inlet) | P |
| Flüssigkeit (Liquid) | L |
| Feststoff (Solid) | S |
| Luft | A |
| Abmessungen | a, r |

## Patentansprüche

1. Vollmantel-Schneckenzentrifuge, die folgendes aufweist:
- eine drehbare Trommel (1) mit horizontaler oder vertikaler Drehachse, die einen Schleuderraum mit einer ebenfalls drehbaren Schnecke (3) umschließt,
- einen Einlauf zum Einleiten eines Schleudergutes (P) in den Schleuderraum,
- wenigstens einen Flüssigkeits- und wenigstens einen Feststoffaustrag (29, 35),
- wobei zumindest dem Feststoffaustrag (29) ein diesen umgebendes, nicht drehbares Gehäuse (39) zugeordnet ist, dass eine Austragskammer (33) zumindest radial begrenzt,
- wobei die Austragskammer (33) als Trocknungskammer für den Feststoff ausgelegt ist, welche ein Gehäuse (39) aufweist, das axiale Wände (41, 43) und in radialer Richtung eine oder mehrere Wandung(en) (45) aufweist,
**dadurch gekennzeichnet, dass**
- sich das Gehäuse (39) axial parallel zur Drehachse (D) höchstens bis in den konischen Bereich der Trommel oder der Schnecke erstreckt
- und dass sich tragende Elemente einer Maschinenrahmenstruktur , wie axial verlaufende Streben (53) oder Pfosten, durch das Innere des Gehäuses (39) und damit das Innere der Austragskammer (33) erstrecken.

2. Vollmantel-Schneckenzentrifuge nach Anspruch 1, **dadurch gekennzeichnet, dass** das Gehäuse (39) eine im Wesentlichen scheibenartige Geometrie aufweist, dessen axiale Erstreckung kürzer ist als dessen maximale radiale Erstreckung im Bereich oberhalb der Drehachse (D).

3. Vollmantel-Schneckenzentrifuge nach einem der vorstehenden Ansprüche, **dadurch gekennzeichnet, dass** der mittlere und/oder kleinste radiale Abstand "a" der Wandung (45) jedenfalls im Bereich oberhalb der Drehachse zu der jeweils nächstliegenden Feststoffaustragsöffnung (31) jedenfalls größer als der doppelte Abstand "r" der Feststoffaustragsöffnungen zur Drehachse "D", wobei vorzugsweise folgendes gilt: a > 4r, insbesondere a > 6r, besonders bevorzugt a > 8r.

4. Vollmantel-Schneckenzentrifuge nach einem der vorstehenden Ansprüche, **dadurch gekennzeichnet, dass** innerhalb der Austragskammer wenigstens eine Wand (50) ausgebildet/angeordnet ist, welche die Austragskammer in die zwei nebeneinander angeordneten Teilkammern (33a, b) unterteilt, die durch wenigstens eine Passage (51) miteinander verbunden sind, wobei sich vorzugsweise die Wand (50) senkrecht zur Drehachse (D) erstreckt und/oder dass die Passage (51) oberhalb der Drehachse (D) liegt.

5. Vollmantel-Schneckenzentrifuge nach einem der vorstehenden Ansprüche, **dadurch gekennzeichnet, dass** das Gehäuse zur Trommel hin vor dem Beginn oder maximal an dem Beginn des konischen Bereichs (9) der Trommel endet und/oder dass sich das Gehäuse auf der von dem konischen Bereich (9) abgewandten Seite axial bis vor ein Getriebe oder bis in den Bereich des Getriebes (13) hinein erstreckt.

6. Vollmantel-Schneckenzentrifuge nach einem der vorstehenden Ansprüche, **dadurch gekennzeichnet, dass** sich das Gehäuse (39) axial parallel zur Drehachse (D) ausgehend von dem Feststoffaustrag (29) höchstens über die Hälfte, vorzugsweise höchstens über ein Viertel, besonders vorzugsweise höchstens über 10%, der axialen Länge des konischen Bereichs der Trommel oder der Schnecke erstreckt und/oder dass das Gehäuse (39) selbst eine tragende, maschinengestellartige Funktion übernimmt bzw. als tragendes Teil desselben ausgestaltet ist.

7. Vollmantel-Schneckenzentrifuge nach einem der vorstehenden Ansprüche, **dadurch gekennzeichnet, dass** ein Gasstrom-, insbesondere Luftstromerzeuger (47) zur Erzeugung einer die Trocknung von Feststoffen unterstützenden Gas-, insbesondere Luftströmung in der Austragskammer (33) vorgesehen ist.

8. Vollmantel-Schneckenzentrifuge nach einem der vorstehenden Ansprüche, **dadurch gekennzeichnet, dass**
- der Gasstrom-, insbesondere Luftstromerzeuger (47) als ergänzend zur Trommel (1) vorgesehener Lüfter ausgebildet ist, und/oder
- dass als der Gasstrom-, insbesondere Luftstromerzeuger oder einer der Gasstrom-, insbesondere Luftstromerzeuger ein sich drehendes Element der Zentrifuge genutzt wird, wobei vorzugsweise der Gasstrom-, insbesondere Luftstromerzeuger oder einer der Gasstrom-, insbesondere Luftstromerzeuger die Trommel oder ein Getriebeelement genutzt wird.

9. Vollmantel-Schneckenzentrifuge nach Anspruch 7 oder 8, **dadurch gekennzeichnet, dass** die Trommel mit einem oder mehreren Lüfterflügeln versehen ist und/oder dass ein sich im Betrieb mit der Trommel drehendes Getriebeteil eines Getriebes (13) auf der vorzugsweise axial von der Trommel abgewandten Seite der Feststoffaustragsöffnungen (31) mit einem oder mehreren der Lüfterflügel (54) versehen ist.

10. Vollmantel-Schneckenzentrifuge nach einem der vorstehenden Ansprüche, **dadurch gekennzeichnet, dass** dem Gasstrom-, insbesondere Luftstromerzeuger (47) wenigstens eine Temperiereinrichtung zur Temperierung des Gas-, insbesondere Luftstroms zugeordnet ist.

11. Vollmantel-Schneckenzentrifuge nach einem der vorstehenden Ansprüche, **dadurch gekennzeichnet, dass** sich das Gehäuse ausgehend von einem geringsten Abstand a vertikal nach unten hin aufweitet.

12. Vollmantel-Schneckenzentrifuge nach einem der vorstehenden Ansprüche, **dadurch gekennzeichnet, dass** die Vollmantel-Schneckenzentrifuge als hängende Konstruktion ausgeführt ist.

13. Vollmantel-Schneckenzentrifuge nach einem der vorstehenden Ansprüche, **dadurch gekennzeichnet, dass** die tragenden Elemente der Maschinenrahmenstruktur, die sich durch das Innere des Gehäuses (39) und damit das Innere der Austragskammer (33) erstrecken, zum Tragen und Abstützen der Trommel ausgelegt sind.

## Claims

1. A solid-jacket screw centrifuge which comprises the following:
- a rotatable drum (1) with a horizontal or vertical rotational axis, said drum surrounding a centrifuge chamber with a screw (3) which is also rotatable,
- an inlet for introducing a suspension (P) to be centrifuged into the centrifuge chamber,
- at least one liquid discharge and at least one solid matter discharge (29, 35),
- wherein at least the solid matter discharge (29) has assigned thereto a non-rotatable housing (39) which surrounds said solid matter discharge and delimits a discharge chamber (33) at least radially,
- wherein the discharge chamber (33) is designed as a drying chamber for the solid matter, which drying chamber comprises a housing (39), which comprises axial walls (41, 43) and in the radial direction one wall or several walls (45),
**characterized in that**
- the housing (39) extends axially parallel to the rotational axis (D) no further than into the conical region of the drum or of the screw
- and that load-bearing elements of a machine frame structure, such as axially extending struts (53) or posts, extend through the interior of the housing 39 and consequently the interior of the discharge chamber 33.

2. The solid-jacket screw centrifuge as claimed in claim 1, **characterized in that** the housing (39) comprises a substantially disk-like geometry, the axial extension of which is shorter than the maximum radial extension thereof in the region above the rotational axis (D).

3. The solid-jacket screw centrifuge as claimed in either of the preceding claims, **characterized in that** the average and/or smallest radial distance "a" between the wall (45), at least in the region above the rotational axis, and the nearest solid matter discharge opening (31) is in each case at least greater than twice the distance "r" between the solid matter discharge openings and the rotational axis "D" wherein preferably the following is true: a > 4r, in particular a > 6r and particularly preferably a > 8r.

4. The solid-jacket screw centrifuge as claimed in one of the preceding claims, **characterized in that** realized/arranged inside the discharge chamber is at least one wall (50), which divides the discharge chamber into the two part chambers (33a, b) which are arranged side by side and are interconnected by means of at least one passage (51), wherein the wall (50) preferably extends perpendicular to the rotational axis (D) and/or **in that** the passage (51) is located above the rotational axis (D).

5. The solid-jacket screw centrifuge as claimed in one of the preceding claims, **characterized in that** toward the drum, the housing ends before the start of or at most at the start of the conical region (9) of the drum and/or the housing extends axially up to in front of a gearing unit or up to into the region of the gearing unit (13) on the side remote from the conical region (9) .

6. The solid-jacket screw centrifuge as claimed in one of the preceding claims, **characterized in that** the housing (39) extends axially parallel to the rotational axis (D) proceeding from the solid matter discharge (29) over no more than half, preferably over no more than a quarter, particularly preferably over no more than 10%, of the axial length of the conical region of the drum or of the screw and/or the housing (39) itself assumes a load-bearing, machine-frame-like function or is developed as a load-bearing part of the same.

7. The solid-jacket screw centrifuge as claimed in one of the preceding claims, **characterized in that** a gas flow generator, in particular an air flow generator (47), is provided for generating a gas flow, in particular an air flow, in the discharge chamber (33) which supports the drying of solids.

8. The solid-jacket screw centrifuge as claimed in one of the preceding claims, **characterized in that**
- the gas flow generator, in particular the air flow generator (47), is realized as a fan which is provided in addition to the drum (1), and/or
- that a rotating element of the centrifuge is utilized as the gas flow generator, in particular air flow generator, or one of the gas flow generators, in particular air flow generators, wherein preferably the drum or a gearing unit element is utilized as the gas flow generator, in particular air flow generator, or one of the gas flow generators, in particular air flow generators.

9. The solid-jacket screw centrifuge as claimed in claims 7 or 8, **characterized in that** the drum is provided with one or several fan blades and/or a gearing unit part of a gearing unit (13), which rotates with the drum in operation, is provided with one or several of the fan blades (54) on the side of the solid matter discharge openings (31) preferably axially remote from the drum.

10. The solid-jacket screw centrifuge as claimed in one of the preceding claims, **characterized in that** the gas flow generator, in particular the air flow generator (47), has assigned thereto at least one tempering device for tempering the gas flow, in particular the air flow.

11. The solid-jacket screw centrifuge as claimed in one of the preceding claims, **characterized in that** the housing widens vertically downward proceeding from a smallest distance a.

12. The solid-jacket screw centrifuge as claimed in one of the preceding claims, **characterized in that** the solid-jacket screw centrifuge is realized as a suspended structure.

13. The solid-jacket screw centrifuge as claimed in one of the preceding claims, **characterized in that** the load-bearing elements of the machine frame structure, which extend through the interior of the housing (39) and consequently the interior of the discharge chamber (33) are designed for bearing and supporting the drum.

## Revendications

1. Centrifugeuse à vis à bol plein, qui présente :
- un tambour rotatif (1) à axe de rotation horizontal ou vertical, qui renferme une chambre de centrifugation avec une vis (3) également rotative,
- une entrée pour l'introduction d'un produit à centrifuger (P) dans la chambre de centrifugation,
- au moins une décharge de liquide et au moins une décharge de matières solides (29, 35),
- dans laquelle au moins la décharge de matières solides (29) est associée à un carter non rotatif (39) qui l'entoure et qui délimite une chambre de décharge (33) au moins radialement,
- dans laquelle la chambre de décharge (33) est conçue comme une chambre de séchage pour les matières solides, qui présente un carter (39) qui présente des parois axiales (41, 43) et une ou plusieurs paroi(s) (45) dans la direction radiale,
**caractérisée en ce que**
- le carter (39) s'étend parallèlement à l'axe de rotation (D) au maximum jusque dans la zone conique du tambour ou de la vis,
- et que des éléments porteurs d'une structure de bâti de machine, tels que des entretoises (53) ou des montants s'étendant axialement, s'étendent à travers l'intérieur du carter (39) et donc à travers l'intérieur de la chambre de décharge (33).

2. Centrifugeuse à vis à bol plein selon la revendication 1, **caractérisée en ce que** le carter (39) présente une géométrie sensiblement en forme de disque, dont l'extension axiale est plus courte que son extension radiale maximale dans la zone située au-dessus de l'axe de rotation (D).

3. Centrifugeuse à vis à bol plein selon l'une des revendications précédentes, **caractérisée en ce que** la distance radiale moyenne et/ou minimale « a » entre la paroi (45), en tout cas dans la zone située au-dessus de l'axe de rotation, et l'ouverture de décharge de matières solides (31) respectivement la plus proche est en tout cas supérieure au double de la distance « r » entre les ouvertures de décharge de matières solides et l'axe de rotation « D », avec de préférence a > 4r, en particulier a > 6r, particulièrement de préférence a > 8r.

4. Centrifugeuse à vis à bol plein selon l'une des revendications précédentes, **caractérisée en ce qu'**au moins une paroi (50) est formée/disposée à l'intérieur de la chambre de décharge, laquelle paroi (50) divise la chambre de décharge en deux sous-chambres (33a, b) disposées l'une à côté de l'autre, qui sont reliées entre elles par au moins un passage (51), la paroi (50) s'étendant de préférence perpendiculairement à l'axe de rotation (D) et/ou le passage (51) étant situé au-dessus de l'axe de rotation (D).

5. Centrifugeuse à vis à bol plein selon l'une des revendications précédentes, **caractérisée en ce que** le carter se termine vers le tambour avant le début ou au maximum au début de la zone conique (9) du tambour et/ou que le carter s'étend axialement sur le côté opposé à la zone conique (9) jusqu'à une transmission ou jusque dans la zone de la transmission (13).

6. Centrifugeuse à vis à bol plein selon l'une des revendications précédentes, **caractérisée en ce que** le carter (39) s'étend parallèlement à l'axe de rotation (D) à partir de la décharge de matières solides (29), au maximum sur la moitié, de préférence au maximum sur un quart, particulièrement de préférence au maximum sur 10 %, de la longueur axiale de la zone conique du tambour ou de la vis et/ou que le carter (39) lui-même assume une fonction porteuse, du type bâti de machine, ou est conçu comme une partie porteuse de celui-ci.

7. Centrifugeuse à vis à bol plein selon l'une des revendications précédentes, **caractérisée en ce qu'**un générateur de flux de gaz, en particulier de flux d'air (47) est prévu pour générer un flux de gaz, en particulier un flux d'air, qui favorise le séchage de matières solides dans la chambre de décharge (33).

8. Centrifugeuse à vis à bol plein selon l'une des revendications précédentes, **caractérisée en ce que**
- le générateur de flux de gaz, en particulier de flux d'air (47) est réalisé sous la forme d'un ventilateur prévu en complément du tambour (1), et/ou
- qu'un élément rotatif de la centrifugeuse est utilisé comme générateur de flux de gaz, en particulier de flux d'air, ou l'un des générateurs de flux de gaz, en particulier de flux d'air, le tambour ou un élément de transmission étant de préférence utilisé comme générateur de flux de gaz, en particulier de flux d'air, ou l'un des générateurs de flux de gaz, en particulier de flux d'air.

9. Centrifugeuse à vis à bol plein selon la revendication 7 ou 8, **caractérisée en ce que** le tambour est pourvu d'une ou plusieurs pales de ventilateur et/ou qu'un élément de transmission d'une transmission (13) qui tourne avec le tambour pendant le fonctionnement est pourvu d'une ou plusieurs des pales de ventilateur (54) sur le côté des ouvertures de décharge de matières solides (31) de préférence axialement opposé au tambour.

10. Centrifugeuse à vis à bol plein selon l'une des revendications précédentes, **caractérisée en ce qu'**au moins un dispositif de régulation de température pour réguler la température du flux de gaz, en particulier du flux d'air, est associé au générateur de flux de gaz, en particulier de flux d'air (47).

11. Centrifugeuse à vis à bol plein selon l'une des revendications précédentes, **caractérisée en ce que** le carter s'élargit verticalement vers le bas à partir d'une plus petite distance a.

12. Centrifugeuse à vis à bol plein selon l'une des revendications précédentes, **caractérisée en ce que** la centrifugeuse à vis à bol plein est réalisée sous la forme d'une construction suspendue.

13. Centrifugeuse à vis à bol plein selon l'une des revendications précédentes, **caractérisée en ce que** les éléments porteurs de la structure de bâti de machine qui s'étendent à travers l'intérieur du carter (39), et donc à l'intérieur de la chambre de décharge (33), sont conçus pour porter et soutenir le tambour.
